# EUROPÄISCHE PATENTSCHRIFT

(11) **EP 2 497 903 B1**
(45) Veröffentlichungstag und Bekanntmachung des Hinweises auf die Patenterteilung: **18.08.2021**
(21) Anmeldenummer: 12157650.8
(22) Anmeldetag: 01.03.2012
(51) Int. Cl.: F01D 5/00

(54) **TURBOMASCHINEN-BAUTEIL**
TURBOMACHINE COMPONENT
COMPOSANT POUR TURBOMACHINES

(30) Priorität: 07.03.2011 CH 377112011
(43) Veröffentlichungstag der Anmeldung: 12.09.2012
(73) Patentinhaber: Ansaldo Energia IP UK Limited, London W1G 9DQ (GB)
(72) Erfinder: Mahler, Alexander, 8280 Kreuzlingen (CH); Hähnle, Hartmut, 79790 Küssaberg (DE)
(74) Vertreter: Bernotti, Andrea

(56) Entgegenhaltungen:
- DE-A1-102008 025 848
- GB-A- 2 254 892
- US-A1- 2010 068 550
- None

## Beschreibung

### TECHNISCHES GEBIET

Die vorliegende Erfindung bezieht sich auf das Gebiet der Turbomaschinen. Sie betrifft ein Turbomaschinen-Bauteil gemäss dem Oberbegriff des Anspruchs 1.

### STAND DER TECHNIK

Es ist im Stand der Technik seit langem bekannt, bei einem Turbomaschinen-Bauteil, zum Beispiel einer Turbinenschaufel, einen Teil des Materials (z.B. durch maschinelle Bearbeitung) zu entfernen und durch einen Einsatz zu ersetzen. Eine solche Vorgehensweise wird hauptsächlich für die Reparatur und Rekonditionierung solcher Bauelemente angewendet, kann aber auch genauso gut für ausserhalb einer Reparatur liegende Zwecke eingesetzt werden.

Für derartige Reparaturen sind in der Vergangenheit für die unterschiedlichsten Bauteile-Typen, Basismaterialien und Fügeprozesse (z.B. Hartlöten, automatisches Schweissen, Schweissen oder eine Kombination von Löten und Schweissen) Lösungsvorschläge gemacht worden. Stellvertretend für viele andere Druckschriften sei in diesem Zusammenhang auf die Druckschriften US 5,822,852, EP 1 143 106, US 6,508,000, US 5,060,842 und US 5,092,942 verwiesen.

Ein solcher Einsatz für ein Turbomaschinen-Bauteil kann die gleiche oder eine unterschiedliche Geometrie haben, wie das Bauteil selbst, und es kann aus dem gleichen oder einem unterschiedlichen Material sein, wie das Bauteil selbst. Der Fügeprozess hängt dabei von dem Material des Bauteils und des Einsatzes ab (siehe dazu die US 6,908,288 oder die US 5,269,057).

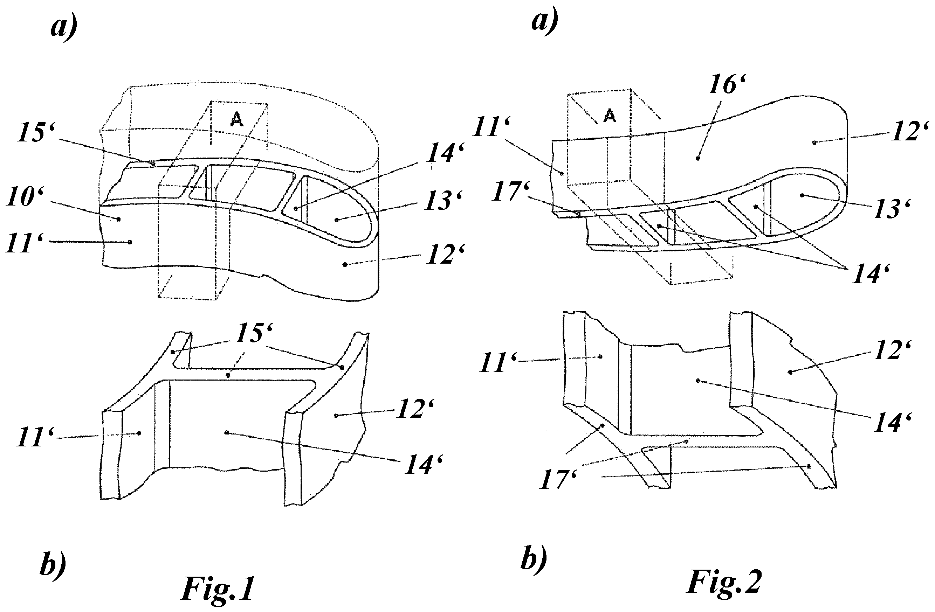

Ein Beispiel für eine solche Konfiguration, die sich konkret auf eine Turbinenschaufel bzw. deren Schaufelblatt bezieht, ist ausschnittweise in den Fig. 1-4 wiedergegeben. Das in den Fig. 1-4 dargestellte Grundbauteil 10' (in diesem Fall ein Schaufelblatt einer Turbinenschaufel) hat eine umlaufende Aussenwand, die einen inneren Hohlraum 13' umschliesst. Die Aussenwand ist unterteilt in eine druckseitige Aussenwand 11' und eine saugseitige Aussenwand 12' (Fig. 1a), die an den Kanten des Schaufelblattes ineinander übergehen. Zwischen den beiden Aussenwänden 11' und 12' verlaufen durch den inneren Hohlraum 13' ein oder mehrere wandartige Zwischenstücke 14', die als Rippen ausgebildet sein können oder den inneren Hohlraum 13' in mehrere Kammern unterteilen. Das Grundbauteil 10' weist auf der Oberseite eine Verbindungsfläche 15' auf (Fig. 1b), die sich über die Aussenwände 11' und 12' und die Zwischenstücke 14' erstreckt und bzw. durch maschinelles Abtragen von Schaufelmaterial entstanden ist.

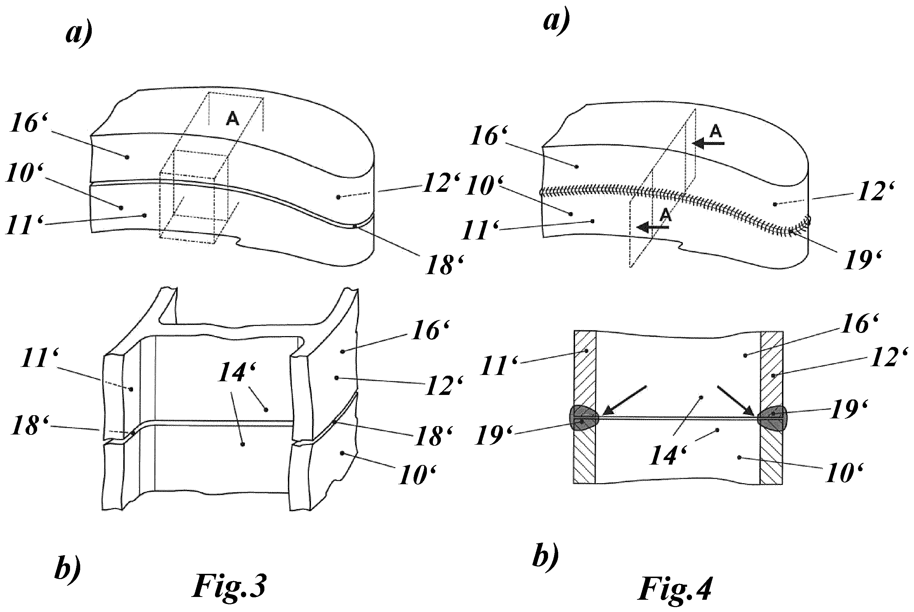

Auf das so vorbereitete Grundbauteil 10' soll ein entsprechend geformtes Zusatzteil 16' gemäss Fig. 2 als Ersatz für das abgetragene Material oder zur Erweiterung des Grundbauteils 10' aufgesetzt und mit dem Grundbauteil 10' durch einen Fügeprozess verbunden werden. Dazu ist auf der Unterseite des Zusatzteils 16' ebenfalls eine Verbindungsfläche 17' ausgebildet, die mit der Verbindungsfläche 15' auf dem Grundbauteil 10' korrespondiert. Gemäss Fig. 3a,b wird das Zusatzteil 16' auf das Grundbauteil 10' aufgesetzt, wobei beide Teile mit ihren Verbindungsflächen 15' beziehungsweise 17' in einem Verbindungsbereich 18' aneinander stossen und eine Stossfuge bilden. Schliesslich werden gemäss Fig. 4a,b beide Teile durch einen geeigneten Fügeprozess, im vorliegenden Beispiel durch Schweissen, miteinander im Verbindungsbereich 18' stoffschlüssig verbunden, wobei als Verbindungsnaht 19' eine Schweissnaht entsteht.

Während die Aussenwände 11' und 12' des Grundbauteils 10' und des Zusatzteils 16' für den Fügeprozess im Allgemeinen zugänglich sind, gestaltet sich das Fügen für die Zwischenstücke 14' wesentlich schwieriger, wenn bzw. ein Schweissprozess eingesetzt wird. Wenn die Zwischenstücke 14' nicht über ihren ganzen Verbindungsbereich oder gar nicht stoffschlüssig verbunden sind, wirken die nicht verbundenen Abschnitte in den Übergangsbereichen zwischen Zwischenstücken und Aussenwänden, die in Fig. 4b mit Pfeilen markiert sind, als Quellen für eine mechanische und/oder thermische Spannungsüberhöhung, wie sie ähnlich durch interne Risse erzeugt wird, und die Belastungsfähigkeit und die zu erwartende Lebensdauer des verbundenen Bauteils werden reduziert.

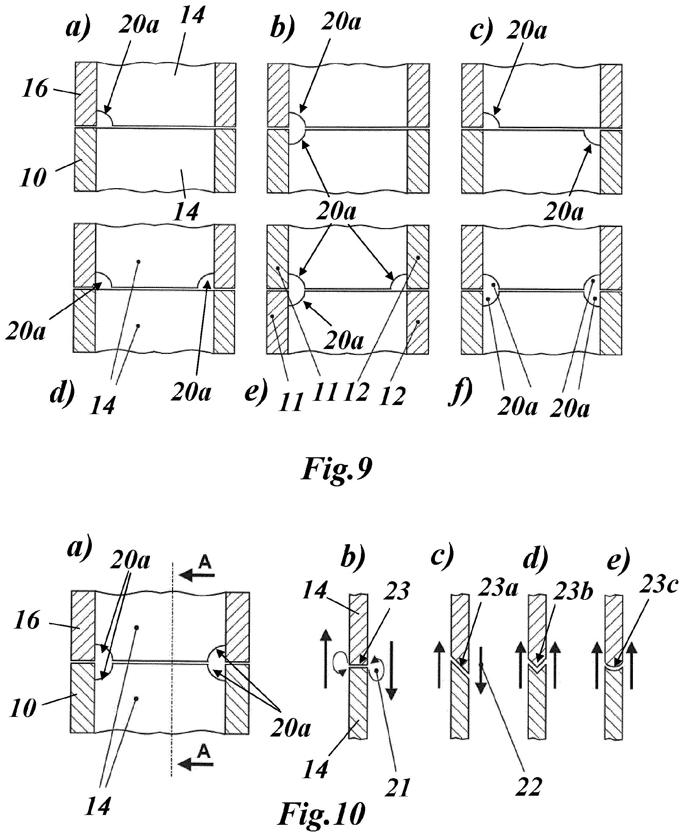

Wenn darüber hinaus im inneren Hohlraum 13' des Turbomaschinen-Bauteils (z.B. zu Kühlungszwecken) ein Medium quer zum Verbindungsbereich zwischen den Zwischenstücken 14' strömt, können im Bereich von Abschnitten, in denen die Zwischenstücke 14' nicht stoffschlüssig verbunden sind, Strömungswirbel (Turbulenzen) auftreten (siehe 21 in Fig. 10b), die lokal die Kühlwirkung herabsetzen können.

Die Druckschrift US 2010068550 beschreibt ein Turbomaschinen-Bauteil nach der Präambel des unabhängigen Anspruchs 1.

### DARSTELLUNG DER ERFINDUNG

Es ist daher eine Aufgabe der Erfindung, die oben beschriebenen Riss-ähnliche Quellen mechanischer und/oder thermischer Spannungsüberhöhungen im

Übergangsbereich zwischen Aussenwänden und inneren Wänden beziehungsweise Zwischenstücken in ihrer Wirkung zu verringern beziehungsweise vollständig zu eliminieren, um die mechanische und/oder thermische Belastbarkeit und die zu erwartende Lebensdauer des Bauteils zu erhöhen.

Es ist weiterhin eine Aufgabe der Erfindung, in diesem Zusammenhang auch die strömungstechnischen Nachteile der nicht stoffschlüssig verbundenen Abschnitte im Inneren des Bauteils zu verringern oder ganz zu beseitigen, um die interne Kühlung des Bauteils zu verbessern.

Diese und andere Aufgaben werden durch die Gesamtheit der Merkmale des Anspruchs 1 gelöst. Die Verbesserung der Kühlung wird dabei insbesondere durch die Ausgestaltung gemäss Anspruch 20 bewirkt.

Die Erfindung geht aus von einem Turbomaschinen-Bauteil gemäß Anspruch 1.

Im Grundbauteil und Zusatzteil ist jeweils ein wandartiges Zwischenstück vorgesehen, wobei die wandartigen Zwischenstücke beider Teile aufeinander ausgerichtet sind und im Verbindungsbereich aneinander stossen.

Vorteilhaft können Grundbauteil und Zusatzteil im Bereich der Zwischenstücke zumindest teilweise miteinander stoffschlüssig verbunden sein. Es ist auch denkbar, dass sie vollständig miteinander stoffschlüssig verbunden sind.

Eine andere Ausgestaltung der Erfindung ist vorteilhaft dadurch gekennzeichnet, dass sich die wandartigen Zwischenstücke durch den inneren Hohlraum hindurch zwischen zwei gegenüberliegenden Abschnitten der Aussenwand erstrecken, so dass sie Aussenwände gegeneinander abstützen und entsprechend Kräfte zwischen den Aussenwänden übertragen.

Gemäss einer anderen Ausgestaltung der Erfindung ist das Zusatzteil als Ersatz für vom Grundbauteil abgetragenes Material vorgesehen. Dies ist insbesondere dann der Fall, wenn das Zusatzteil zur Reparatur des Grundbauteils als Ersatz in eine im Grundbauteil ausgearbeitete Ausnehmung eingesetzt wird.

Es ist aber auch denkbar, dass das Zusatzteil zur Erweiterung des Grundbauteils vorgesehen ist.

Grundsätzlich können Grundbauteil und Zusatzteil aus unterschiedlichen Materialien bestehen, wenn dies zweckmässig ist. Vorzugsweise bestehen jedoch Grundbauteil und Zusatzteil aus demselben Material.

Gemäss einer anderen Ausgestaltung der Erfindung sind Grundbauteil und Zusatzteil durch einen geeigneten Fügeprozess miteinander stoffschlüssig verbunden. Dabei ist der Fügeprozess beliebig. Vorzugsweise kann Schweissen und/oder Hartlöten und/oder Kleben verwendet werden.

Mit besonderem Vorteil kann die Erfindung eingesetzt werden, wenn das Bauteil eine Turbinenschaufel ist.

Die Spannung abbauende Übergangskontur gegenüber den Verbindungsflächen von Grundbauteil bzw. Zusatzteil ist zurückspringend ausgebildet. Hierdurch wird eine mechanische Entkopplung zwischen den Aussenwänden und dem Zwischenstück im Verbindungsbereich erzielt, durch die mechanische und/oder thermische Spannungen in diesem Bereich deutlich reduziert werden.

Vorzugsweise ist die Spannung abbauende Übergangskontur an der Innenseite der Aussenwand zurückgesetzt ausgebildet.

Der detaillierte Verlauf der Übergangskontur kann dabei unterschiedlich ausgestaltet sein.

So kann es vorteilhaft sein, wenn die Spannung abbauende Übergangskontur in einer vorgegebenen Entfernung auf das Niveau der Verbindungsflächen zurückgekehrt.

Insbesondere kann die Spannung abbauende Übergangskontur in einem Bogen, insbesondere in Form eines Viertelkreises, auf das Niveau der Verbindungsflächen zurückkehren.

Alternativ dazu kann die Spannung abbauende Übergangskontur aber auch in einem linearen Anstieg auf das Niveau der Verbindungsflächen zurückkehren.

Ebenso ist es denkbar, wenn dass die Spannung abbauende Übergangskontur sprungartig auf das Niveau der Verbindungsflächen zurückgekehrt.

In anderen Fällen kann die Spannung abbauende Übergangskontur auf einem gegenüber den Verbindungsflächen abgesenkten Niveau verbleiben.

In diesem Zusammenhang ist es denkbar, dass bei der die Spannung abbauenden Übergangskontur der Übergang auf das abgesenkte Niveau sprungartig erfolgt.

Der Übergang bei der die Spannung abbauenden Übergangskontur auf das abgesenkte Niveau kann aber auch in einem Bogen erfolgen.

Des Weiteren kann der Übergang der die Spannung abbauenden Übergangskontur auf das abgesenkte Niveau linear erfolgen.

Je nach Bedarf kann eine solche Übergangskontur an einem oder mehreren Übergängen zwischen dem Zwischenstück der Aussenwand vorgesehen werden.

Wenn Grundbauteile und Zusatzteil jeweils ein Zwischenstück aufweisen und die Zwischenstücke beider Teile im Verbindungsbereich mit einer Stossfuge aneinander stossen, ohne dass der gebildete Spalt zwischen beiden Zwischenstücken durch eine stoffschlüssige Verbindung vollständig geschlossen ist, und wenn im inneren Hohlraum längs der Zwischenstücke ein Medium, zum Beispiel Kühlluft, strömt, können sich unerwünschte Strömungswirbel im Verbindungsbereich bilden. Um diese Strömungswirbel zu reduzieren, kann es von Vorteil sein, wenn gemäss einer anderen Ausgestaltung der Erfindung die Stossfuge zur Verringerung von dort auftretenden Strömungs-Turbulenzen eine Querschnittskontur aufweist, die von einer senkrecht zum Zwischenstück orientierten Geraden abweicht.

Eine solche Abweichung kann darin bestehen, dass die Stossfuge eine zum Zwischenstück schräg liegende lineare Querschnittskontur aufweist. Eine solche Querschnittskontur ist dann von Vorteil, wenn die Strömungsrichtung auf beiden Seiten der Stossfuge entgegengesetzt ist.

Es ist aber auch denkbar, dass die Stossfuge eine V-förmige Querschnittskontur aufweist, oder dass die Stossfuge eine bogenförmige Querschnittskontur aufweist. Eine solche Querschnittskontur ist dann von Vorteil, wenn die Strömungsrichtung auf beiden Seiten der Stossfuge gleich ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1-4: jeweils in mehreren Teilfiguren (a) und (b) ein Beispiel für ein Turbomaschinen-Bauteil in Form einer Turbinenschaufel, welches in herkömmlicher Weise gemäss bekanntem Stand der Technik ausgebildet und durch Fügen eines Grundbauteils und eines Zusatzteils erzeugt wird;
- Fig. 5-6: jeweils in mehreren Teilfiguren (a) und (b) ein zu Fig. 1-4 vergleichbares Turbomaschinen-Bauteil, welches gemäss einem Ausführungsbeispiel der Erfindung ausgebildet und durch Fügen eines Grundbauteils und eines Zusatzteils erzeugt wird;
- Fig. 7: im Querschnitt verschiedene Beispiele einer Übergangskontur zwischen Aussenwand und Zwischenstück;
- Fig. 8: im Querschnitt verschiedene Ausführungsbeispiele einer Anordnung von erfindungsgemässen Übergangskonturen zwischen Aussenwand und Zwischenstück am Zusatzteil;
- Fig. 9: im Querschnitt verschiedene Ausführungsbeispiele einer kombinierten Anordnung von erfindungsgemässen Übergangskonturen zwischen Aussenwand und Zwischenstück am Grundbauteil und Zusatzteil;
- Fig. 10: im Querschnitt in verschiedenen Teilfiguren die Wirbelbildung bei einer Konfiguration gemäss Fig. 9f (Fig. 10a,b) sowie Ausführungsbeispiele für Querschnittskonturen zur Verringerung der Wirbelbildung (Fig. 10c-e).

### WEGE ZUR AUSFÜHRUNG DER ERFINDUNG

Gemäss der Erfindung können die Riss-ähnlichen mechanischen und/oder thermische Spannungsquellen am Übergang zwischen dem Verbindungsbereich der Aussenwände und dem Verbindungsbereich der Zwischenstücke in ihrer Wirksamkeit reduziert beziehungsweise beseitigt werden, indem durch einen Ausschnitt mit einer von einer Geraden abweichende Übergangskontur die Geometrie in diesem Übergangsbereich verändert wird.

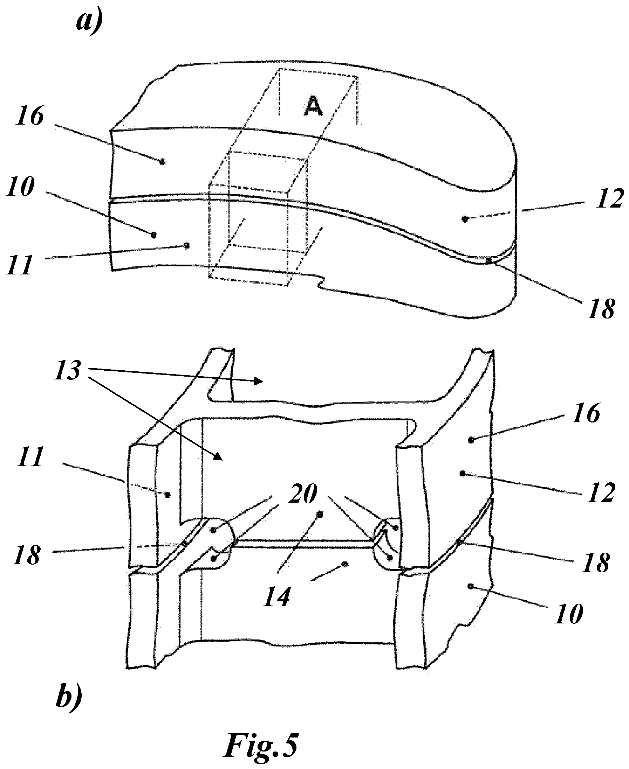

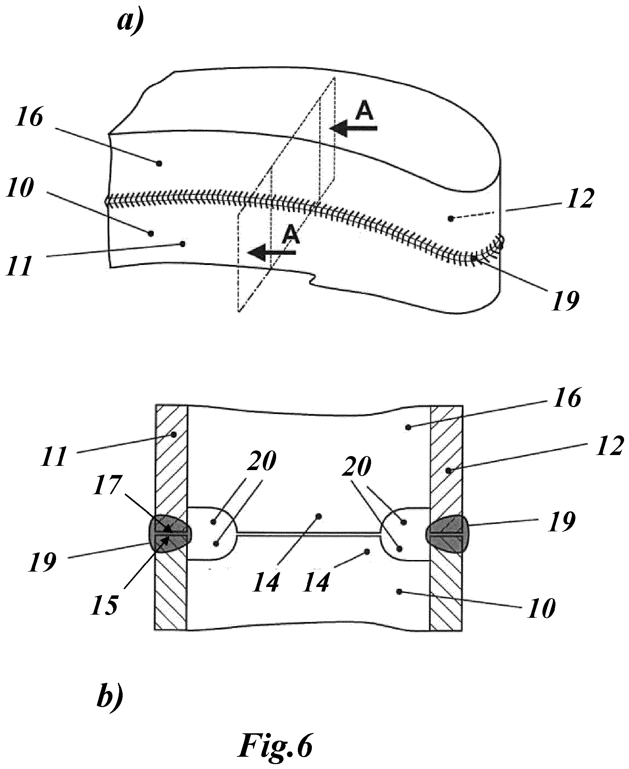

In Fig. 5 und 6 ist in Analogie zu Fig. 3 und 4 ein entsprechendes Ausführungsbeispiel der Erfindung dargestellt, bei dem ein Turbomaschinen-Bauteil durch formschlüssige Verbindung zwischen einem Grundbauteil 10 und einem Zusatzteil 16 erzeugt wird. Die beiden Teile 10 und 16 haben jeweils eine druckseitige Aussenwand 11 und eine saugseitige Aussenwand 12 und sind an zugehörigen Verbindungsflächen 15 und 17 in einem Verbindungsbereich 18 miteinander stoffschlüssig verbunden. Die Verbindung wird bzw. durch eine Verbindungsnaht 19 bewirkt. Die beiden Teile 10 und 16 weisen im inneren Hohlraum 13 wiederum wandartige Zwischenstücke 14 auf, die mit entsprechenden Verbindungsflächen aneinander stossen. Zur Beseitigung mechanischer und/oder thermischer Spannungen sind in diesem Ausführungsbeispiel nun Übergangskonturen 20 (Fig. 5b und 6b) an den Übergängen zwischen Zwischenstück 14 und Aussenwand 11 beziehungsweise 12 vorgesehen, die durch Aussparungen in Form von Langloch-Abschnitten erzeugt werden, also aus einem geraden Abschnitt und einem Viertelkreis zusammengesetzt sind.

Derartige Übergangskonturen 20 können zur Spannungsreduzierung eingesetzt werden, wenn die Zwischenstücke 14 vollständig oder teilweise im Verbindungsbereich 18 stoffschlüssig miteinander verbunden sind. Sie können aber auch eingesetzt werden, wenn die Zwischenstücke 14 nicht untereinander verbunden sind, wie dies in Fig. 6b gezeigt ist.

Derartige Übergangskonturen 20 können je nach Bedarf beim Grundbauteil 10 und/oder Zusatzteil 16 an der einen und/oder der anderen Aussenwand eingesetzt werden. Die Übergangskonturen können gekrümmt, polygonal oder kombiniert gekrümmt, linear und/oder polygonal ausgebildet sein.

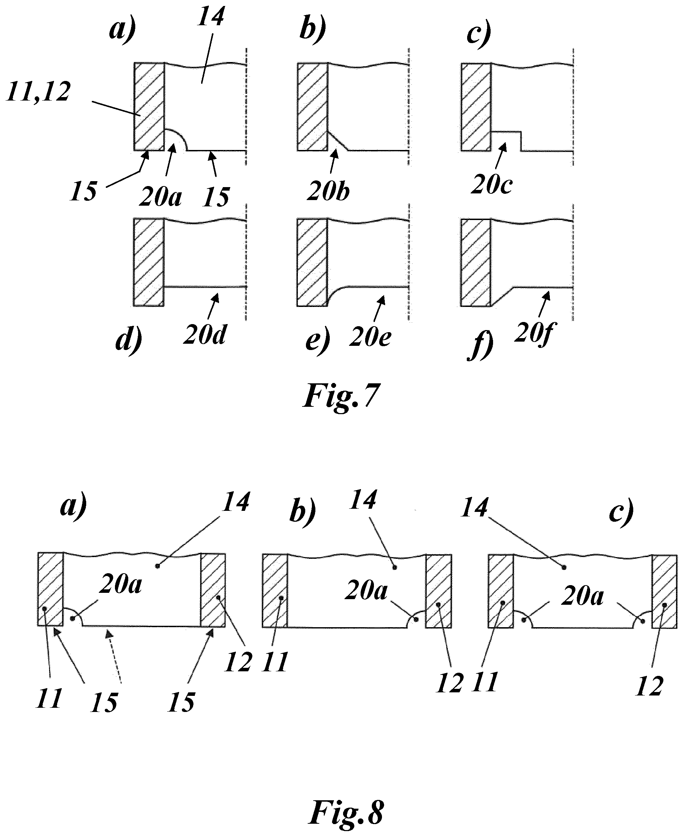

Verschiedene Beispiele solcher Ubergangskontur sind in Fig. 7a, 7c, 7e, 7f wiedergegeben.

Generell sind die Übergangskonturen dieser Ausführungsbeispiele gegenüber den Verbindungsflächen 15, 17 von Grundbauteil 10 bzw. Zusatzteil 16 zurückspringend ausgebildet. Insbesondere können die Übergangskonturen an der Innenseite der Aussenwand 11, 12 zurückgesetzt ausgebildet sein (Übergangskonturen 20a, 20c in Fig. 7a, 7c). Dabei können Übergangskonturen in einer vorgegebenen Entfernung von der Aussenwand 11, 12 auf das Niveau der Verbindungsflächen 15, 17 zurückkehren (Übergangskonturen 20a, 20c in Fig. 7a, 7c). Diese Rückkehr kann gekrümmt in einem Bogen, insbesondere in Form eines Viertelkreises, erfolgen (Übergangskontur 20a in Fig. 7a). Die Übergangskonturen können aber auch sprungartig auf das Niveau der Verbindungsflächen 15, 17 zurückkehren (Übergangskontur 20c in Fig. 7c).

Weiterhin ist es denkbar, dass die die Spannung abbauende Übergangskontur auf einem gegenüber den Verbindungsflächen 15, 17 abgesenkten Niveau verbleibt (Übergangskontur 20e, 20f in Fig. 7e, 7f), wobei der Übergang auf das abgesenkte Niveau gekrümmt in einem Bogen (Übergangskontur 20e in Fig. 7e), oder linear (Übergangskontur 20 f in Fig. 7f).

Wie in Fig. 8 und Fig. 9 gezeigt, können zu gleicher Zeit eine oder mehrere (in diesem Beispiel Viertelkreis-artige) Übergangskonturen 20a im Turbomaschinen-Bauteil verteilt angeordnet sein. Gemäss einer generellen Regel können Rissartige Spannungsquellen jeweils durch zwei gegenüberliegende Übergangskonturen (20a in Fig. 9b oder f) vollständig beseitigt werden, wobei das Beispiel aus Fig. 9f zu dem in Fig. 6 gezeigten äquivalent ist und die Erfindung sowohl auf die Saugseite als auch auf die Druckseite anwendet.

Selbst wenn - wie in den Beispielen (a) (c), (d) und (e) aus Fig. 9 - eine Übergangskontur 20a wahlweise nur am Grundbauteil 10 oder Zusatzteil 16 vorgesehen wird, kann eine deutliche Reduzierung der mechanischen und/oder thermischen Spannung erzielt werden.

Darüber hinaus verbessern solche Übergangskonturen den Fügeprozess der Teile 10 und 16 insgesamt.

Geht man von einer Konfiguration gemäss Fig. 5 bzw. 6 aus, die in Fig. 10a noch einmal dargestellt ist, können, wie in Fig. 10b dargestellt, an den Kanten nicht oder nicht vollständig miteinander stoffschlüssig verbundener Zwischenstücke 14 unerwünschte Strömungswirbel 21 entstehen, wenn durch den inneren Hohlraum 13 des Turbomaschinen-Bauteils ein Medium (z.B. Kühlluft) strömt. Die Bildung solcher Strömungswirbel 21 kann durch eine entsprechende Gestaltung (in der Querschnittskontur) der Stossfuge 23 zwischen den Zwischenstücken 14 beeinflusst werden.

Wenn gemäss Fig. 10c die Strömungsrichtung 22 auf beiden Seiten der Zwischenstücke 14 entgegengesetzt ist, ist eine Stossfuge 23a vorteilhaft, die eine zum Zwischenstück 14 schräg liegende lineare Querschnittskontur aufweist.

Sind gemäss Fig. 10d und e die Strömungsrichtungen auf beiden Seiten der Zwischenstücke 14 gleich gerichtet, ist es vorteilhaft, wenn die Stossfuge 23b eine V-förmige (polygonale) Querschnittskontur, oder wenn die Stossfuge 23c eine bogenförmige (gekrümmte) Querschnittskontur aufweist. Selbstverständlich sind auch kombinierte polygonale und gekrümmte Querschnittskonturen möglich.

Generell ist die vorliegende Erfindung anwendbar auf alle Turbomaschinen-Bauteile mit innerem Hohl und wandartigen Zwischenstücken, wie z.B. Turbinenschaufeln, Verdichterschaufeln, Wärmestausegmenten, Brennkammerkomponenten, träger- und Gehäuseteilen.

Insgesamt ergibt sich mit der Erfindung ein Turbomaschinen-Bauteil, welches sich durch folgende Eigenschaften und Vorteile auszeichnet:
- die Erfindung lässt sich auf Turbomaschinen-Bauteile anwenden, bei denen abgetragenes Material ersetzt oder neues Material hinzugefügt werden soll. Dies gilt insbesondere für Reparatur, Rekonditionierung, Designänderung, Retrofit, Upgrade, neues Design, Reverse Engineering oder eine Kombination dieser Prozesse;
- Grundbauteil und Zusatzteil können dabei gleichartige oder unterschiedliche Geometrien haben;
- das Material von Grundbauteil und Zusatzteil kann gleich oder unterschiedlich sein;
- das Zusatzteil kann auf beliebiger Weise, z.B. aus dem vollen Material maschinell hergestellt oder gegossen, gesintert oder durch generative Methoden ("rapid manufacturing") hergestellt werden;
- das Grundbauteil und das Zusatzteil können durch irgendeinen Fügeprozess, insbesondere Schweissen (vorzugsweise automatisches Schweissen) oder Löten (vorzugsweise Hartlöten) oder Kleben oder eine Kombination davon miteinander verbunden werden;
- die Erfindung lässt sich auf ein Turbomaschinen-Bauteil oder einen Einsatz mit einem oder mehreren internen Wänden, Rippen oder Verstrebungen anwenden;
- die Erfindung lässt sich auf Fälle anwenden, in denen nur die Aussenwände, aber auch die Aussenwände und die internen Wände, Rippen oder Verstrebungen ganz oder teilweise miteinander stoffschlüssig verbunden werden;
- als Spannung abbauende Massnahme wird eine spezielle Übergangskontur am Übergang zwischen dem Verbindungsbereich der Aussenwände und der internen Wände, Rippen oder Verstrebungen eingesetzt;
- durch die Spannung abbauende Übergangskontur wird die Belastbarkeit und Lebensdauer an den betroffenen Stellen und für das Turbomaschinen-Bauteil insgesamt erhöht;
- die Spannung abbauende Übergangskontur erleichtert zusätzlich den Fügeprozess;
- die Spannung abbauende Übergangskontur wird durch einen Ausschnitt in der internen Wand, Rippe oder Verstrebung des Grundbauteils und/oder des Zusatzteils erzeugt, der gekrümmt, linear, polygonal oder kombiniert gekrümmt, linear und/oder polygonal sein kann;
- die Übergangskontur kann lokal begrenzt sein, oder sich vollständig zwischen gegenüberliegenden Abschnitten der Aussenwände erstrecken;
- die Ausschnitte beziehungsweise Übergangskonturen können an einer oder mehreren Stellen vorgesehen werden;
- zusätzlich kann durch spezielle Wahl der Querschnittskontur des Verbindungsbereichs zwischen den internen Wänden, Rippen oder Verstrebungen die Bildung von Strömungswirbeln günstig beeinflusst werden.
- die Querschnittskontur des Verbindungsbereichs zwischen den internen Wänden, Rippen oder Verstrebungen kann gekrümmt, linear, polygonal oder kombiniert gekrümmt, linear und/oder polygonal sein.

### BEZUGSZEICHENLISTE

- 10,10': Grundbauteil (z.B. Turbinenschaufel)
- 11,11': Aussenwand (z.B. Druckseite)
- 12,12': Aussenwand (z.B. Saugseite)
- 13,13': innerer Hohlraum
- 14,14': Zwischenstück (z.B. Innenwand oder Rippe)
- 15,15': Verbindungsfläche
- 16,16': Zusatzteil
- 17,17': Verbindungsfläche
- 18,18': Verbindungsbereich
- 19,19': Verbindungsnaht (z.B. Schweissnaht)
- 20: Übergangskontur
- 20a-f: Übergangskontur
- 21: Strömungswirbel
- 22: Strömungsrichtung
- 23: Stossfuge
- 23a-c: Stossfuge

## Patentansprüche

1. Turbomaschinen-Bauteil (10, 16), umfassend ein Grundbauteil (10) und ein Zusatzteil (16), welche jeweils mit einer Aussenwand (11, 12) einen inneren Hohlraum (13) umschliessen, im Bereich der Aussenwand (11, 12) mit aufeinander abgestimmten Verbindungsflächen (15, 17) in einem Verbindungsbereich (18) aneinander stossen und in den Verbindungsflächen (15, 17) stoffschlüssig miteinander verbunden sind, wobei im Grundbauteil (10) und im Zusatzteil (16) jeweils wenigstens ein wandartiges Zwischenstück (14) vorgesehen ist, welches sich von der Aussenwand (11, 12) ausgehend in den inneren Hohlraum (13) hinein erstreckt, wobei die wandartigen Zwischenstücke (14) beider Teile (10, 16) aufeinander ausgerichtet sind und im Verbindungsbereich (18) aneinander stoßen, **dadurch gekennzeichnet, dass** an wenigstens einem Übergang zwischen Zwischenstück (14) und Aussenwand (11, 12) zum dortigen Abbau mechanischer und/oder thermischer Spannungen ein Ausschnitt mit einer von einer Geraden abweichenden Übergangskontur (20; 20a-f) angeordnet ist; wobei die Spannung abbauende Übergangskontur (20; 20a-f) gegenüber den Verbindungsflächen (15, 17) von Grundbauteil (10) bzw. Zusatzteil (16) zurückspringend ausgebildet ist.

2. Turbomaschinen-Bauteil nach Anspruch 1, **dadurch gekennzeichnet, dass** das Grundbauteil (10) und das Zusatzteil (16) im Bereich der Zwischenstücke (14) zumindest teilweise miteinander stoffschlüssig verbunden sind.

3. Turbomaschinen-Bauteil nach einem der Ansprüche 1-2, **dadurch gekennzeichnet, dass** sich die Zwischenstücke (14) durch den inneren Hohlraum (13) hindurch zwischen zwei gegenüberliegenden Abschnitten der Aussenwand (11, 12) erstrecken.

4. Turbomaschinen-Bauteil nach einem der Ansprüche 1-3, **dadurch gekennzeichnet, dass** das Zusatzteil (16) als Ersatz für vom Grundbauteil (10) abgetragenes Material vorgesehen ist.

5. Turbomaschinen-Bauteil nach einem der Ansprüche 1-3, **dadurch gekennzeichnet, dass** das Zusatzteil (16) zur Erweiterung des Grundbauteils (10) vorgesehen ist.

6. Turbomaschinen-Bauteil nach einem der Ansprüche 1-5, **dadurch gekennzeichnet, dass** das Grundbauteil (10) und das Zusatzteil (16) aus demselben Material bestehen.

7. Turbomaschinen-Bauteil nach einem der Ansprüche 1-6, **dadurch gekennzeichnet, dass** das Grundbauteil (10) und das Zusatzteil (16) durch Schweissen und/oder Hartlöten und/oder Kleben miteinander stoffschlüssig verbunden sind.

8. Turbomaschinen-Bauteil nach einem der Ansprüche 1-7, **dadurch gekennzeichnet, dass** das Bauteil (10) eine Turbinenschaufel ist.

9. Turbomaschinen-Bauteil nach Anspruch 1, **dadurch gekennzeichnet, dass** die Zwischenstücke (14) von Grundbauteil (10) und Zusatzteil (16) im Verbindungsbereich (18) mit einer Stossfuge (23a-c) aneinander stossen, welche zur Verringerung von dort auftretenden Strömungs-Turbulenzen eine Querschnittskontur aufweist, die von einer senkrecht zum Zwischenstück (14) orientierten Geraden abweicht.

10. Turbomaschinen-Bauteil nach Anspruch 9, **dadurch gekennzeichnet, dass** die Stossfuge (23a) eine zum Zwischenstück (14) schräg liegende lineare Querschnittskontur aufweist.

11. Turbomaschinen-Bauteil nach Anspruch 9, **dadurch gekennzeichnet, dass** die Stossfuge (23b) eine V-förmige Querschnittskontur aufweist.

12. Turbomaschinen-Bauteil nach Anspruch 9, **dadurch gekennzeichnet, dass** die Stossfuge (23c) eine bogenförmige Querschnittskontur aufweist.

## Claims

1. Turbomachine component (10, 16) comprising a base component (10) and an additional part (16), each of which with an outer wall (11, 12) encloses an inner cavity (13), and which abut one another in the region of the outer wall (11, 12) with mutually corresponding connecting faces (15, 17) in a connecting region (18), and which are substance-bonded to one another at the connecting faces (15, 17), wherein at least one wall-like intermediate piece (14) is provided in each of the base component (10) and in the additional part (16) and extends from the outer wall (11, 12) into the inner cavity (13), wherein the wall-like intermediate pieces (14) of both parts (10, 16) are oriented to one another and abut one another in the connecting region (18), **characterised in that** a cutout with a transitional contour (20; 20a-f) deviating from a straight line is arranged on at least one transition between the intermediate piece (14) and the outer wall (11, 12) for dissipation of mechanical and/or thermal stresses there; wherein the stress-dissipating transitional contour (20; 20a-f) is configured set back relative to the connecting faces (15, 17) of the base component (10) or additional part (16).

2. Turbomachine component according to claim 1, **characterised in that** in the region of the intermediate pieces (14), the base component (10) and the additional part (16) are at least partially connected together by substance bonding.

3. Turbomachine component according to one of claims 1-2, **characterised in that** the intermediate pieces (14) extend through the inner cavity (13) between two opposing portions of the outer wall (11, 12).

4. Turbomachine component according to any of claims 1-3, **characterised in that** the additional part (16) is provided as a replacement for material carried away from the base component (10).

5. Turbomachine component according to any of claims 1-3, **characterised in that** the additional part (16) is provided for extending the base component (10).

6. Turbomachine component according to any of claims 1-5, **characterised in that** the base component (10) and the additional part (16) consist of the same material.

7. Turbomachine component according to any of claims 1-6, **characterised in that** the base component (10) and the additional part (16) are substance-bonded together by welding and/or hard soldering and/or adhesive bonding.

8. Turbomachine component according to any of claims 1-7, **characterised in that** the component (10) is a turbine blade.

9. Turbomachine component according claim 1, **characterised in that** the intermediate pieces (14) of the base component (10) and the additional part (16) abut one another in the connecting region (18) with a butt joint (23a-c) which has a cross-sectional contour that deviates from a straight line oriented perpendicularly to the intermediate piece (14) in order to reduce flow turbulence occurring there.

10. Turbomachine component according to claim 9, **characterised in that** the butt joint (23a) has a linear cross-sectional contour lying obliquely relative to the intermediate piece (14).

11. Turbomachine component according to claim 9, **characterised in that** the butt joint (23b) has a V-shaped cross-sectional contour.

12. Turbomachine component according to claim 9, **characterised in that** the butt joint (23c) has an arcuate cross-sectional contour.

## Revendications

1. Composant de turbomachine (10, 16), comprenant un composant de base (10) et une pièce additionnelle (16), lesquels entourent respectivement avec une paroi extérieure (11, 12) une cavité intérieure (13), se touchent dans la zone de la paroi extérieure (11, 12) avec des surfaces de liaison (15, 17) adaptées l'une à l'autre dans une zone de liaison (18) et sont reliées l'une à l'autre par liaison de matière dans les surfaces de liaison (15, 17), dans lequel respectivement au moins une pièce intermédiaire (14) du type paroi est prévue dans le composant de base (10) et dans la pièce additionnelle (16),
laquelle s'étend à partir de la paroi extérieure (11, 12) à l'intérieur de la cavité intérieure (13), dans lequel les pièces intermédiaires (14) du type paroi des deux pièces (10, 16) sont orientées l'une vers l'autre et se touchent dans la zone de liaison (18), **caractérisé en ce qu'**une découpe avec un contour de transition (20 ; 20a-f) différent d'une droite est disposée sur au moins une transition entre la pièce intermédiaire (14) et la paroi extérieure (11, 12) pour la diminution à cet endroit de tensions mécaniques et/ou thermiques ;
dans lequel le contour de transition (20 ; 20a-f) diminuant la tension est réalisé de manière à être en retrait par rapport aux surfaces de liaison (15, 17) du composant de base (10) et de la pièce additionnelle (16).

2. Composant de turbomachine selon la revendication 1, **caractérisé en ce que** le composant de base (10) et la pièce additionnelle (16) sont reliés au moins en partie l'un à l'autre par liaison de matière dans la zone des pièces intermédiaires (14).

3. Composant de turbomachine selon l'une quelconque des revendications 1-2, **caractérisé en ce que** les pièces intermédiaires (14) s'étendent à travers la cavité intérieure (13) entre deux parties opposées de la paroi extérieure (11, 12).

4. Composant de turbomachine selon l'une quelconque des revendications 1-3, **caractérisé en ce que** la pièce additionnelle (16) est prévue comme remplacement de matière enlevée du composant de base (10).

5. Composant de turbomachine selon l'une quelconque des revendications 1-3, **caractérisé en ce que** la pièce additionnelle (16) est prévue pour l'agrandissement du composant de base (10).

6. Composant de turbomachine selon l'une quelconque des revendications 1-5, **caractérisé en ce que** le composant de base (10) et la pièce additionnelle (16) sont constitués du même matériau.

7. Composant de turbomachine selon l'une quelconque des revendications 1-6, **caractérisé en ce que** le composant de base (10) et la pièce additionnelle (16) sont reliés l'un à l'autre par liaison de matière par soudage et/ou brasage dur et/ou collage.

8. Composant de turbomachine selon l'une quelconque des revendications 1-7, **caractérisé en ce que** le composant (10) est une aube de turbine.

9. Composant de turbomachine selon la revendication 1, **caractérisé en ce que** les pièces intermédiaires (14) du composant de base (10) et de la pièce additionnelle (16) se touchent dans la zone de liaison (18) avec un joint en about (23a-c), lequel, pour la réduction de turbulences d'écoulement apparaissant à cet endroit, présente un contour en section transversale qui est différent d'une droite orientée perpendiculairement à la pièce intermédiaire (14).

10. Composant de turbomachine selon la revendication 9, **caractérisé en ce que** le joint en about (23a) présente un contour en section transversale linéaire situé de manière inclinée par rapport à la pièce intermédiaire (14).

11. Composant de turbomachine selon la revendication 9, **caractérisé en ce que** le joint en about (23b) présente un contour en section transversale en forme de V.

12. Composant de turbomachine selon la revendication 9, **caractérisé en ce que** le joint en about (23c) présente un contour en section transversale en forme d'arc.
